# EUROPEAN PATENT SPECIFICATION

(11) **EP 4 454 949 B1**
(45) Date of publication and mention of the grant of the patent: **11.02.2026**
(21) Application number: 22909813.2
(22) Date of filing: 13.12.2022
(51) Int. Cl.: B60Q 1/46, B60Q 1/34

(54) **VEHICLE FLASHING LIGHT CONTROL METHOD AND APPARATUS, VEHICLE AND STORAGE MEDIUM**
VERFAHREN UND VORRICHTUNG ZUR STEUERUNG EINER FAHRZEUGBLINKLEUCHTE, FAHRZEUG UND SPEICHERMEDIUM
PROCÉDÉ ET APPAREIL DE COMMANDE DE LUMIÈRE CLIGNOTANTE DE VÉHICULE, VÉHICULE ET SUPPORT DE STOCKAGE

(30) Priority: 24.12.2021 CN 202111602387
(43) Date of publication of application: 30.10.2024
(73) Proprietor: Great Wall Motor Company Limited, Baoding, Hebei 071000 (CN)
(72) Inventor: ZHANG, Junwei, Baoding, Hebei 071000 (CN); HUANG, Leilei, Baoding, Hebei 071000 (CN); HUANG, Guoqing, Baoding, Hebei 071000 (CN)
(74) Representative: Klunker IP Patentanwälte PartG mbB
(86) International application number: PCT/CN2022/138571
(87) International publication number: WO 2023/116499

(56) References cited:
- EP-A1- 2 775 801
- EP-B1- 0 810 118
- CN-A- 1 883 982
- CN-A- 108 156 716
- CN-A- 110 562 126
- CN-A- 112 977 475
- CN-A- 113 347 760
- CN-A- 115 107 637
- JP-A- S58 202 124
- JP-B2- 6 220 184
- US-A1- 2009 003 006
- US-A1- 2011 215 653
- US-A1- 2020 290 504
- US-B2- 10 081 301

## Description

### TECHNICAL FIELD

The present invention relates to the technical field of vehicle control and, more particularly, to a vehicle flashing light control method and apparatus, vehicle and nonvolatile computer-readable storage medium.

### BACKGROUND

A flashing light (such as a steering light and a hazard warning light) on a vehicle generally indicates a state of a vehicle for a driver and personnel outside the vehicle by light flicker. When the flashing light is in a non-working state, a flashing light request is triggered, and the flashing light flickers at a preset frequency. According to different working conditions, the priority of the flashing light request is different, and the flicker frequency is different.

Currently, when there is a conflict among different-priority requests of the flashing light of the vehicle, different processing is performed according to the conflict situation. When the flashing light is in a working state with a low-priority request, a high-priority flashing light request is triggered, then a low-priority flashing light is directly turned off, and the flashing light responds to the high-priority flashing light request to flicker at a corresponding frequency. When the flashing light is in a working state with a high-priority request, a low-priority flashing light request is triggered, there is no response to the low-priority flashing light request, and the working state of the current flashing light is unchanged.

However, the inventor finds that the low-priority flashing light request is interrupted by the high-priority flashing light request, interruption is directly performed to lead to nonuniform flicker states; and when the high-priority flashing light request is interrupted by the low-priority flashing light request, no processing is performed directly, by which the driver and the personnel outside the vehicle cannot know about a real state of the vehicle, which easily causes traffic accidents.
JP 6 220 184 B2 discloses a lamp unit control device for vehicles, particularly one using multiple LEDs as light sources in direction indicators or hazard lamps. Unlike traditional incandescent systems, the device allows independent blinking of multiple LEDs and provides disconnection fault detection visibility. To this effect, there is an independent LED control using synchronized driving and lamp control circuits with two blinking modes: normal (first driving voltage) and abnormal (second driving voltage with a different period) to indicate fault states. A transition mechanism introduces a short, synchronized off-state across all LEDs before switching modes, making the transition between normal and abnormal blinking clearly visible to the user. Thus, LED disconnections are immediately perceivable due to a distinguishable blinking pattern.
EP 2 775 801 A1 discloses a control device for LED-based motorcycle direction indicators providing wire disconnection detection while also extending the LED lifetime, wherein the control system includes: A pulse generator for blinking control, current and volt-age clamp units to cap current and voltage to safe limits, a disconnection detection unit that evaluates both, if the current drops below a defined threshold thereby indicating fewer functioning LEDs, and if the reference voltage rises to a set upper limit indicative of disconnection. The device responds to detected faults by adjusting the blink signal, e.g., changing frequency or holding high state, making the fault noticeable.

### SUMMARY

### TECHNICAL PROBLEM

It is an object of the present invention to provide a method and apparatus for controlling a flashing light of a vehicle, a vehicle, and a nonvolatile computer-readable storage medium to solve the problem that a flicker frequency of the flashing light is nonuniform or a user cannot know about a real state of the vehicle due to interruption processing for the flashing light of the vehicle in the prior art.

### TECHNICAL SOLUTION

The object is achieved by the features of independent claim 1 regarding the method for controlling a flashing light of a vehicle, of independent claim 5 regarding the apparatus for controlling a flashing light of a vehicle, of independent claim 9 regarding the vehicle, and of independent claim 10 regarding the nonvolatile computer-readable storage medium. Further embodiments are defined in the dependent claims. :

### BENEFICIAL EFFECT

The present invention provides a method and apparatus for controlling a flashing light of a vehicle, and a vehicle. When a flashing light corresponding to a flashing light switching request and the current flashing light are the same flashing light, a switching moment is determined according to a working state and a first flicker frequency of the current flashing light and a second flicker frequency of the flashing light corresponding to the flashing light switching request, a first flicker frequency of the current flashing light is switched to a second flicker frequency of the flashing light corresponding to the flashing light switching request at the switching moment, and the working state of the flashing light corresponding to the flashing light switching request is different from the working state of the current flashing light achieved when the flashing light switching request is received, so that the consistency of flicker states before and after switching can be avoided, alternation of the on state and the off state of the flashing light and the uniformity of flicker frequencies before and after switching can be achieved, and a driver and personnel outside the vehicle can know about a real state of the vehicle to reduce traffic accidents.

### BRIEF DESCRIPTION OF THE DRAWINGS

In order to more clearly illustrate the technical solutions of the present invention, the figures that are required to describe the invention or the prior art will be briefly described below.
FIG. 1 is a flow chart showing the achievement of a method for controlling a flashing light of a vehicle;
FIG. 2 is a schematic diagram showing interruption for that a low-frequency flashing light in a working state is interrupted by a high-frequency flashing light and the low-frequency flashing light is in a high-level state not falling under scope of the claims;
FIG. 3 is a schematic diagram showing interruption for that a high-frequency flashing light in a working state is interrupted by a low-frequency flashing light and the high-frequency flashing light is in a high-level state not falling under scope of the claims;
FIG. 4 is a schematic diagram showing interruption for that a low-frequency flashing light in a working state is interrupted by a high-frequency flashing light and the low-frequency flashing light is in a low-level state;
FIG. 5 is a schematic diagram showing interruption for that a low-frequency flashing light in a working state is interrupted by a high-frequency flashing light and the low-frequency flashing light is in a low-level state;
FIG. 6 is a schematic diagram showing interruption for that a high-frequency flashing light in a working state is interrupted by a low-frequency flashing light and the high-frequency flashing light is in a low-level state;
FIG. 7 is a schematic diagram showing interruption of different flashing lights;
FIG. 8 is a schematic diagram showing interruption of different flashing lights;
FIG. 9 is a schematic diagram showing interruption for that a frequency of a locking flashing light is interrupted by a frequency of an unlocking flashing light not falling under the scope of the claims;
FIG. 10 is a schematic structural diagram of an apparatus for controlling a flashing light of a vehicle; and
FIG. 11 is a schematic diagram of an electronic device.

### DETAILED DESCRIPTION OF THE EMBODIMENTS

In the following description, specific details such as specific system structures and technologies are provided for illustrating purposes rather than limitation, to facilitate a thorough understanding of the present invention.

In order to clarify the purpose, technical solution, and advantages of the present invention, it will be described below in conjunction with the accompanying drawings.

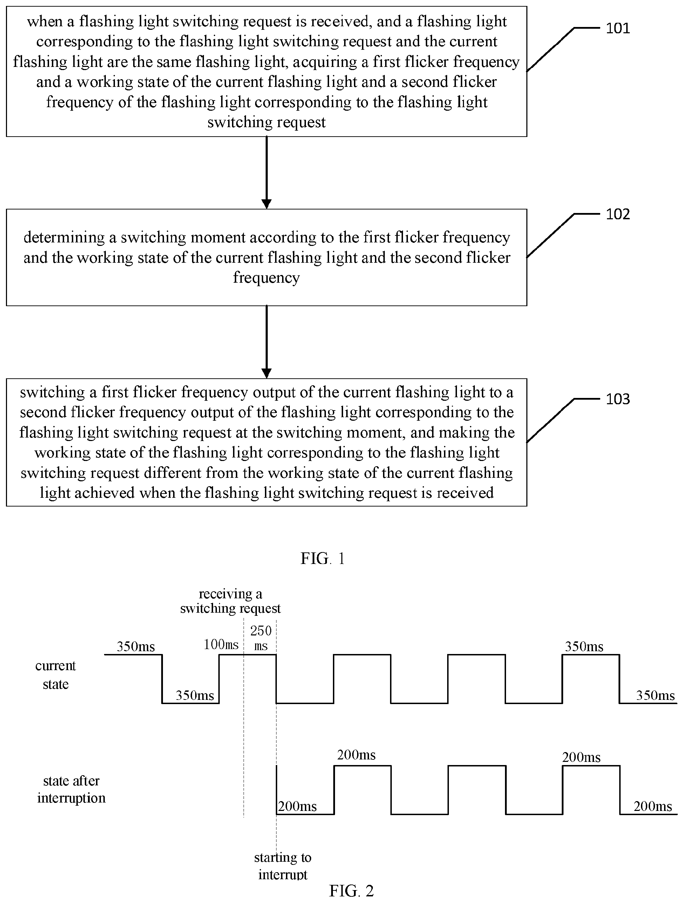

FIG. 1 is a flow chart showing the achievement of a method for controlling a flashing light of a vehicle. In the prior art, interruption control on a steering light is based on a priority of a request, preferably makes a response to a high-priority request, and even makes no response to a low-priority request, and a phenomenon that flicker frequencies are inconsistent can also be caused during interruption switching, which lowers user experience. In order to solve the above-mentioned problem, switching is based on a flicker frequency corresponding to a flashing light during interruption control on the flashing light, so that different-priority requests can be equally processed, and the phenomenon that the flicker frequencies are inconsistent after switching is processed. An existing flashing light at least includes four kinds of frequencies, and time corresponding to each light flicker can be 350ms, 200ms, 150ms, and always-on 1s, respectively.

The method for controlling the flashing light of the vehicle is described in detail as follows:

step 101, when a flashing light switching request is received, and a flashing light corresponding to the flashing light switching request and the current flashing light are the same flashing light, acquiring a first flicker frequency and a working state of the current flashing light and a second flicker frequency of the flashing light corresponding to the flashing light switching request; wherein the working state includes an on state and an off state of flicker.

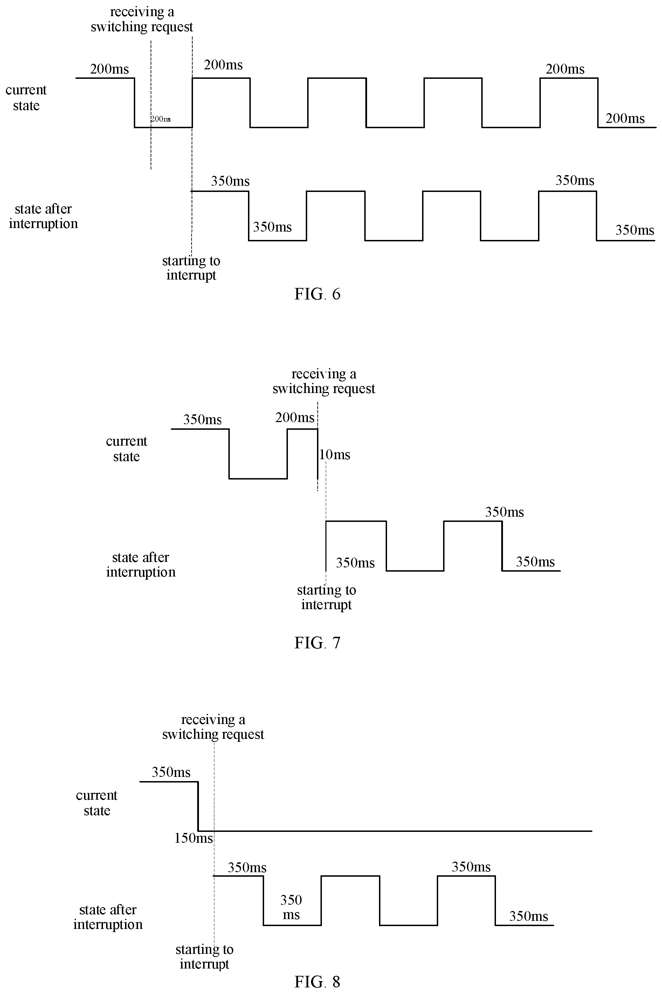

The current flashing light is a flashing light that is in a working state currently and is flickering at a certain frequency for caution, at the moment, when the flashing light switching request is received, it should be distinguished whether the flashing light corresponding to the flashing light switching request and the current flashing light are the same flashing light, and when the both are the same flashing light, for example, they are both left steering lights or right steering lights, interruption processing is performed according to flicker frequencies of the flashing light corresponding to the flashing light switching request and the current flashing light. When the both are different flashing lights, interruption processing different from interruption processing for the same flashing light is adopted for control, which specifically refers to FIGs. 7 to 9 and corresponding descriptions. The flashing light can be divided into steering lights, a hazard warning light, a locking flashing light, and an unlocking flashing light; wherein the steering lights include a left steering light and a right steering light.

In the present embodiment, first and second in the first flicker frequency and the second flicker frequency are only intended to distinguish different flicker frequencies, rather than to sort the flicker frequencies. Time of the on state or the off state of each flicker corresponding to different flicker frequencies is different, but the time of the on state and time of the off state corresponding to the same flicker frequency are the same, the on state is also referred to as an On state, i.e., a state that a flashing light is turned on, and the off state is also referred to as an Off state, i.e., a state that a flashing light is turned off.

It should be noted that the on state and the off state can be two different corresponding working states when the flashing light flickers, can be relative concepts, i.e., different brightnesses, for example, the flashing light can be divided into three levels from off to on, the third level is the brightest, the on state can be a third-level state, and the off state is a first-level state. Similarly, the on state can be a second-level state, and the off state is the first-level state, or the on state is the third-level state, and the off state is the second-level state. The flicker of the flashing light can also be controlled by a level, a high level corresponds to the on state, and a low level corresponds to the off state. Herein, the low level is relative to the high level and can be a level slightly lower than the high level.

Step 102, determining a switching moment according to the first flicker frequency and the working state of the current flashing light and the second flicker frequency.

In the present embodiment, after the flashing light switching request is received, switching is not directly performed, a switching moment (i.e. an interruption moment) is determined according to the working state and the first flicker frequency and the second flicker frequency of the flashing lights, and switching is performed at the switching moment, so that the problem of nonuniform flicker frequencies caused by interruption in the prior art is solved.

How to determine the switching moment will be described in detail below with different embodiments.

In an embodiment, there are two situations for interruption processing when the current flashing light is in the working state and the on state. For a first situation, a low-frequency flashing light in a working state is interrupted by a high-frequency flashing light, and the low-frequency flashing light is in an on state. As shown in FIG. 2, the current flashing light under a low-priority flashing light request is in the on state, a flashing light switching request from a high-priority flashing light is received, a frequency of the high-priority flashing light is the second flicker frequency, for example, the time of the on state or the off state of each flicker can be 200ms, and a frequency of a low-priority flashing light is the first flicker frequency, for example, the time of the on state or the off state of each flicker can be 350ms. It should be noted that the priority of the flashing light request is not directly related to the flicker frequency of the flashing light. At that moment, when the working state of the current flashing light is the on state, it can be determined that the switching moment is a moment at which the on state corresponding to the first flicker frequency is ended. With reference to FIG. 2, the flashing light switching request is received in the on state, for example, the flashing light switching request is received when a duration time of the on state is 100ms, and interruption is performed after the on state lasts for the 350ms. When it is determined that the switching moment is reached, a frequency output of the current flashing light is switched to a second flicker frequency output started in the off state. For such flashing light switching, although the flicker frequencies before and after switching are different, the situation of nonuniform flicker frequencies caused by immediately switching the flashing light to the off state due to interruption after just switching from the off state to the on state in the prior art can be avoided. In the present embodiment, the flicker frequencies of the flashing light before and after switching can be relatively uniform.

It should be noted that a low priority and a high priority that are described herein are relative. Generally, priorities requested in the vehicle can be divided into sixteen priorities from high to low, wherein priority 1 is the highest priority, and priority 16 is the lowest priority.
Priority 1: thermal runaway alarm, wherein thermal runaway means that a battery in a vehicle is overheated;
Priority 2: collision alarm;
Priority 3: backup door mislocking prevention;
Priority 4: back-row living detection prompt;
Priority 5: emergency brake light;
Priority 6: flicker during failure of brake light;
Priority 7: locking prompt, unlocking indication, and anti-theft fortification;
Priority 8: anti-theft alarm;
Priority 9: anti-pinch alarm for window and skylight;
Priority 10: vehicle finding tips;
Priority 11: back door open system learning and high learning;
Priority 12: highway pilot (HWP) system steering light and HWP hazard warning light;
Priority 13: steering light function (including a steering light and a lane change light), hazard warning light function, and intelligent driving steering light;
Priority 14: automatic emergency braking and safety braking;
Priority 15: back-collision prewarning; and
Priority 16: parking assistance instruction.

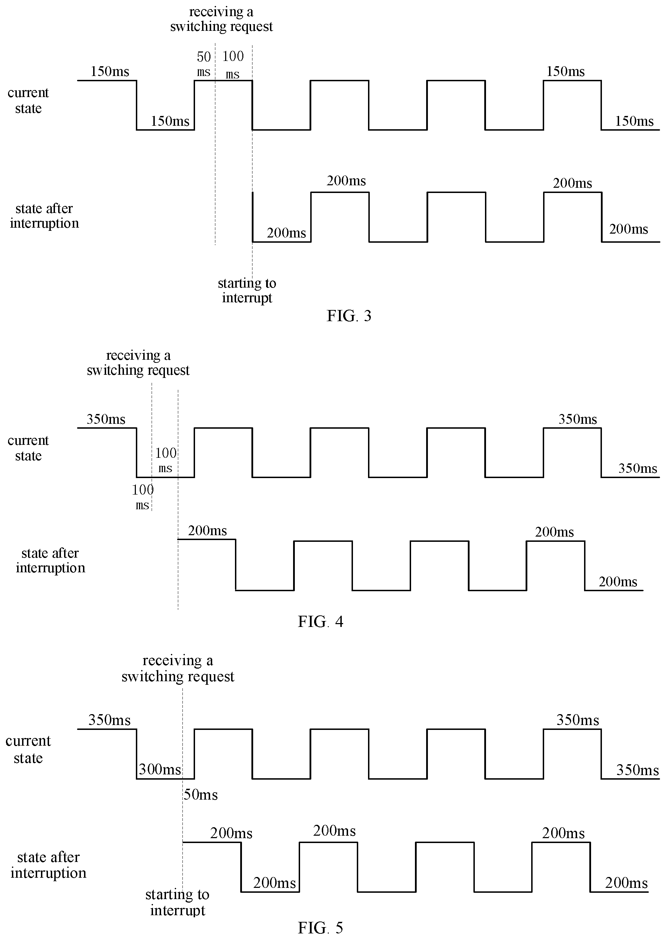

For a second situation, a high-frequency flashing light in a working state is interrupted by a low-frequency flashing light, and the high-frequency flashing light is on a high level. As shown in FIG. 3, the current flashing light under a low-priority flashing light request is in the on state, a flicker frequency thereof is the first flicker frequency, for example, the time of the on state or the off state of each flicker can be 150ms, and a flashing light switching request from a high-priority flashing light is received, a frequency thereof is the second flicker frequency, for example, the time of the on state or the off state of each flicker can be 200ms. At the moment, when the working state of the current flashing light is the on state, it can be determined that the switching moment is a moment at which the on state corresponding to the first flicker frequency is ended. That is, the flashing light switching request is received in the on state, for example, the flashing light switching request is received when a duration time of the on state is 50ms, and interruption is performed after the on state lasts for the 150ms. When it is determined that the switching moment is reached, a first flicker frequency output of the current flashing light is switched to a second flicker frequency output of the flashing light corresponding to the flashing light switching request, and the working state of the flashing light corresponding to the flashing light switching request is the off state.

When interruption control is performed on the current flashing light in the working state in the off state, the switching moment needs to be determined according to the flicker frequency and the duration time of the off state of the current flashing light. Optionally, when the working state of the current flashing light is the off state, it is detected whether the second flicker frequency is lower than the first flicker frequency; when the second flicker frequency is lower than the first flicker frequency, it is detected whether a duration time of the off state is shorter than a duration time of the on state corresponding to the second flicker frequency; and when the duration time of the off state is shorter than the duration time of the on state corresponding to the second flicker frequency, it is determined that the switching moment is a corresponding moment at which the duration time of the off state is equal to the duration time of the on state corresponding to the second flicker frequency.

As shown in FIG. 4, a low-frequency flashing light in a working state is interrupted by a high-frequency flashing light, and the low-frequency flashing light is on a low level. The current flashing light in a working state is a low-priority flashing light, a flicker frequency thereof is the first flicker frequency, for example, a duration time of the on state or the off state of each flicker is 350ms; when the low-priority flashing light is in the off state, a flashing light switching request from a high-priority flashing light is received, for example, a duration time of the on state or the off state of each flicker is 200ms, then the second flicker frequency is higher than the first flicker frequency; and when the duration time of the off state is shorter than the duration time of the on state corresponding to the second flicker frequency, as shown in FIG. 4, the duration time of the off state is 100ms, but does not exceed 200ms, at the moment, it is determined that a moment at which the off state lasts for another 100ms is the switching moment, and thus, switching is performed at a moment when the off state lasts for 200ms, the flashing light is switched from a first flicker frequency output to a second flicker frequency output, and the working state of the flashing light corresponding to the flashing light switching request is the on state. The flicker frequency of the flashing light processed in such a way will not be changed abruptly and is relatively uniform.

Optionally, after the step that it is detected whether a duration time of the off state is shorter than a duration time of the on state corresponding to the second flicker frequency, the method further includes: when the duration time of the off state is longer than or equal to the duration time of the on state corresponding to the second flicker frequency, it is determined that the switching moment is a moment at which the flashing light switching request is received. As shown in FIG. 5, such an application scenario is still that a low-frequency flashing light is interrupted by a high-frequency flashing light, which is similar to the situation shown in FIG. 4 except that the duration time of the off state has exceeded 200ms, for example, when having been 300 ms which is the duration time of the off state, the moment at which the flashing light switching request is received is longer than the duration time of the on state corresponding to the second flicker frequency of the flashing light corresponding to the flashing light switching request, at the moment, switching is directly performed.

In an embodiment, a scenario shown in FIG. 4 and FIG. 5 is that a low-frequency flashing light is interrupted by a high-frequency flashing light. In the present embodiment, a scenario shown in FIG. 6 is that a high-frequency flashing light is interrupted by a low-frequency flashing light. For example, a duration time of the on state or the off state corresponding to the second flicker frequency is 350ms, a duration time of the on state or the off state corresponding to the first flicker frequency is 200ms, a flashing light switching request is received in an off state of the current flashing light in a working state, for example, the flashing light switching request is received at 50ms, in order to keep the flicker frequency relatively uniform, it is determined that the switching moment is a moment at which the off state corresponding to the first flicker frequency is ended, that is, when the off state lasts for 200ms, a first flicker frequency output of the current flashing light is switched to a second flicker frequency output of the flashing light corresponding to the flashing light switching request, and the working state of the flashing light corresponding to the flashing light switching request is the on state.

The method for controlling the flashing light in the case that the flashing light corresponding to the flashing light switching request and the current flashing light are the same flashing light is described in above embodiment, and a corresponding method for controlling a flashing light of a vehicle when the flashing light corresponding to the flashing light switching request and the current flashing light are not the same flashing light is further included.

In an embodiment, after the flashing light switching request is received, the method can further include: when the flashing light corresponding to the flashing light switching request and the current flashing light are not the same flashing light, after the flashing light switching request is received, the current flashing light is turned off, and the flashing light corresponding to the flashing light switching request is turned on. Thus, it can be ensured that a timely response is made to the flashing light switching request to reduce time delay.

The flashing light corresponding to the flashing light switching request and the current flashing light are not the same flashing light, which can include that: the flashing light corresponding to the flashing light switching request is a left/right steering light, and the current flashing light is a right/left steering light; the flashing light corresponding to the flashing light switching request is a left/right steering light, and the current flashing light is a hazard warning light; the flashing light corresponding to the flashing light switching request is a hazard warning light, and the current flashing light is a right/left steering light; and the flashing light corresponding to the flashing light switching request is an unlocking light, and the current flashing light is a locking light.

Under a demand of ensuring the timely response of different flashing lights, in order to ensure that the flicker frequencies are relatively uniform, different switching ways can be adopted according to different working states. Optionally, when the flashing light corresponding to the flashing light switching request and the current flashing light are not the same flashing light, and the working state of the current flashing light is the on state, after the flashing light switching request is received, the current flashing light is turned off, the flashing light corresponding to the flashing light switching request is turned on after output is performed in the off state for a preset time, and the working state of the flashing light corresponding to the flashing light switching request is kept in the on state. The preset time described herein can be set as required, for example, the preset time can be 10ms, 20ms and other durations, which will not be specifically limited herein.

When the flashing light corresponding to the flashing light switching request and the current flashing light are not the same flashing light, and the working state of the current flashing light is the off state, after the flashing light switching request is received, the current flashing light is turned off, at the same time, the flashing light corresponding to the flashing light switching request is turned on, and the working state of the flashing light corresponding to the flashing light switching request is kept in the on state.

As shown in FIG. 7, when the flashing light corresponding to the flashing light switching request is the left/right steering light, and the current flashing light is the right/left steering light, flicker frequencies thereof are both 350ms; and when the flashing light switching request is received in the on state, the right/left steering light is immediately turned off, the left/right steering light is turned on after keeping in the off state for 10ms, outputting in the on state is performed.

As shown in FIG. 8, when the flashing light corresponding to the flashing light switching request is the left/right steering light, and the current flashing light in the working state is the right/left steering light, flicker frequencies thereof are both 350ms; and when the flashing light switching request is received in the off state, the right/left steering light is immediately turned off, at the same time, the left/right steering light is turned on, outputting in the on state is performed.

With reference to FIG. 7, when the flashing light corresponding to the flashing light switching request is the left/right steering light, and the current flashing light is the hazard warning light, or the flashing light corresponding to the flashing light switching request is the hazard warning light, and the current flashing light is the left/right steering light, if the flashing light switching request is received in the on state of the current flashing light, the hazard warning light or the left/right steering light is immediately turned off, and frequencies start to be outputted in the on state.

In an embodiment, with reference to FIG. 8, when the flashing light corresponding to the flashing light switching request is the left/right steering light, and the current flashing light is the hazard warning light, or the flashing light corresponding to the flashing light switching request is the hazard warning light, and the current flashing light is the left/right steering light, if the flashing light switching request is received in the off state of the current flashing light, the hazard warning light or the left/right steering light is immediately turned off, at the same time, the left/right steering light or the hazard warning light is turned on, and outputting is started in the on state.

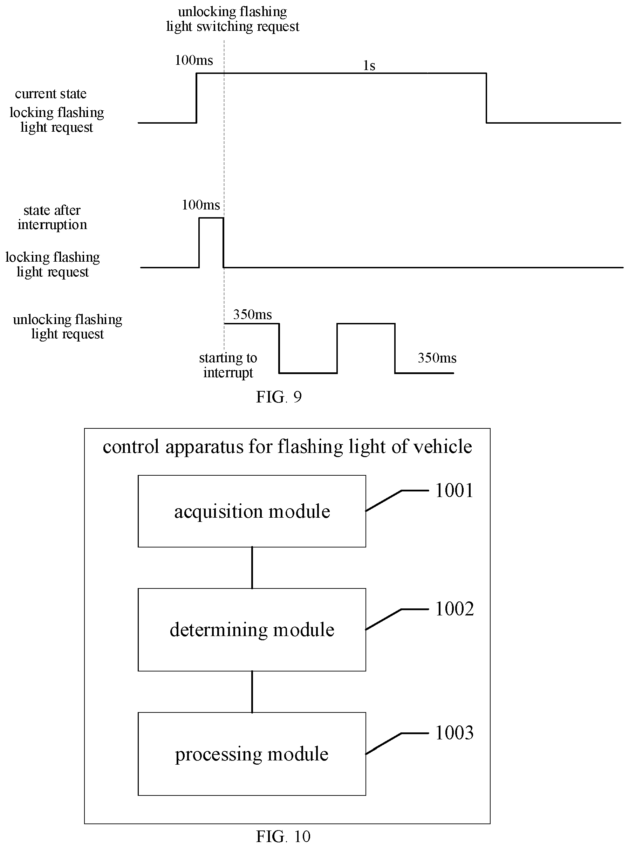

In an embodiment, as shown in FIG. 9, a flicker duration of the locking flashing light is 1 second (1s), and it is in the off state in other time, for example, a flashing light switching request from the unlocking flashing light is received when the on state lasts for 100ms, and after the off state lasts for a preset time, the off state is immediately switched to the on state, and outputting is performed at a flicker frequency of the unlocking flashing light.

Step 103, switching a first flicker frequency of the current flashing light to a second flicker frequency of the flashing light corresponding to the flashing light switching request at the switching moment, and the working state of the flashing light corresponding to the flashing light switching request is different from the working state of the current flashing light achieved when the flashing light switching request is received.

A specific description for the present step refers to the description for step 102 and FIG. 2 to FIG. 9.

It can be understood that numerical values mentioned here are only for the purpose of reference, rather than specific limitations on relative numerical values. During actual applications, other specific numerical values can also be adopted.

According to the above-mentioned method for controlling the flashing light of the vehicle, when the flashing light corresponding to the flashing light switching request and the current flashing light are the same flashing light, the switching moment is determined according to different working states and the first flicker frequency of the flashing light and the second flicker frequency of the flashing light corresponding to the flashing light switching request, the first flicker frequency of the flashing light is switched to the second flicker frequency at the switching moment, and the working state of the flashing light corresponding to the flashing light switching request is different from the working state of the current flashing light achieved when the flashing light switching request is received, so that flicker frequencies of the flashing light before and after switching can be kept uniform, and a driver and personnel outside the vehicle can know about a real state of the vehicle to reduce traffic accidents. In addition, when the flashing light corresponding to the flashing light switching request and the current flashing light are not the same flashing light, after the flashing light switching request is received, the current flashing light is turned off, and the flashing light corresponding to the flashing light switching request is turned on to perform frequency output, so that it can be ensured that a timely response is made to the flashing light switching request to reduce time delay.

It should be understood that the serial number of each step in the above-mentioned embodiment does not mean an order of execution. The order of execution of each process should be determined based on functions and internal logics thereof, and should not constitute any limitations on an implementation process.

An apparatus of the present invention is shown below, and details not described in detail therein can refer to the above-mentioned corresponding method.

FIG. 10 shows a schematic structural diagram of an apparatus for controlling a flashing light of a vehicle.

As shown in FIG. 10, the apparatus for controlling the flashing light of the vehicle includes an acquisition module 1001, a determining module 1002, and a processing module 1003.

The acquisition module 1001 is configured to when a flashing light switching request is received, and a flashing light corresponding to the flashing light switching request and the current flashing light are the same flashing light, acquire a first flicker frequency and a working state of the current flashing light and a second flicker frequency of the flashing light corresponding to the flashing light switching request; wherein the working state includes an on state and an off state of flicker;
the determining module 1002 is configured to determine a switching moment according to the first flicker frequency and the working state of the current flashing light and the second flicker frequency; and
the processing module 1003 is configured to switch a first flicker frequency of the current flashing light to a second flicker frequency of the flashing light corresponding to the flashing light switching request at the switching moment, and the working state of the flashing light corresponding to the flashing light switching request is different from the working state of the current flashing light achieved when the flashing light switching request is received.

In a possible implementation, when determining the switching moment according to the first flicker frequency and the working state of the current flashing light and the second flicker frequency, the determining module 1002 is configured to:
when the working state of the current flashing light is the on state, determine that the switching moment is a moment at which the on state corresponding to the first flicker frequency is ended.

In a possible implementation, when determining the switching moment according to the first flicker frequency and the working state of the current flashing light and the second flicker frequency, the determining module 1002 is configured to:
when the working state of the current flashing light is the off state, determine whether the second flicker frequency is higher than the first flicker frequency;
when the second flicker frequency is higher than the first flicker frequency, determine whether a duration time of the off state is shorter than a duration time of the on state corresponding to the second flicker frequency; and
when the duration time of the off state is shorter than the duration time of the on state corresponding to the second flicker frequency, determine that the switching moment is a corresponding moment at which the duration time of the off state is equal to the duration time of the on state corresponding to the second flicker frequency.

In a possible implementation, after determining whether a duration time of the off state is shorter than a duration time of the on state corresponding to the second flicker frequency, the determining module 1002 is further configured to:
when the duration time of the off state is longer than or equal to the duration time of the on state corresponding to the second flicker frequency, determine that the switching moment is a moment at which the flashing light switching request is received.

In a possible implementation, after determining whether the second flicker frequency is higher than the first flicker frequency, the determining module 1002 is further configured to:
when the second flicker frequency is lower than the first flicker frequency, determine that the switching moment is a moment at which the off state corresponding to the first flicker frequency is ended.

In a possible implementation, the processing module 1003 is further configured to:
when the flashing light corresponding to the flashing light switching request and the current flashing light are not the same flashing light, after the flashing light switching request is received, turn off the current flashing light, and turn on the flashing light corresponding to the flashing light switching request.

In a possible implementation, when the flashing light corresponding to the flashing light switching request and the current flashing light are not the same flashing light, after the flashing light switching request is received, the current flashing light is turned off, and the flashing light corresponding to the flashing light switching request is turned on, the processing module 1003 is configured to:
when the flashing light corresponding to the flashing light switching request and the current flashing light are not the same flashing light, and the working state of the current flashing light is the on state, after the flashing light switching request is received, turn off the current flashing light, turn on the flashing light corresponding to the flashing light switching request after staying in the off state for a preset time, and keep the working state of the flashing light corresponding to the flashing light switching request in the on state; and
when the flashing light corresponding to the flashing light switching request and the current flashing light are not the same flashing light, and the working state of the current flashing light is the off state, after the flashing light switching request is received, turn off the current flashing light, at the same time, turn on the flashing light corresponding to the flashing light switching request, and keep the working state of the flashing light corresponding to the flashing light switching request in the on state.

It should be noted that technical means and technical effects which are not described in detail in the apparatus can refer to the corresponding technical means and technical effects in the method.

According to the above-mentioned apparatus for controlling the flashing light of the vehicle, when the flashing light corresponding to the flashing light switching request and the current flashing light in the working state are the same flashing light, the determining module determines the switching moment according to the working state and the first flicker frequency of the flashing light and the second flicker frequency of the flashing light corresponding to the flashing light switching request, the processing module switches the first flicker frequency of the flashing light to the second flicker frequency at the switching moment, and the working state of the flashing light corresponding to the flashing light switching request is different from the working state of the current flashing light achieved when the flashing light switching request is received, so that flicker frequencies of the flashing light before and after switching can be kept uniform, and a driver and personnel outside the vehicle can know about a real state of the vehicle to reduce traffic accidents. In addition, the processing module is further configured to when the flashing light corresponding to the flashing light switching request and the current flashing light are not the same flashing light, after receiving the flashing light switching request, turn off the current flashing light, and turn on the flashing light corresponding to the flashing light switching request, so that it can be ensured that a timely response is made to the flashing light switching request to reduce time delay.

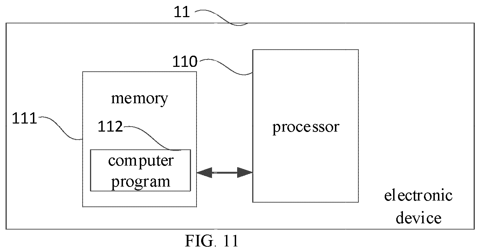

The invention further provides a vehicle, and the vehicle includes a schematic diagram of an electronic device shown in FIG. 11. As shown in FIG. 11, the electronic device 11 in the embodiment includes a processor 110, a memory 111, and a computer program 112 stored in the memory 111 and capable of running on the processor 110. The processor 110, when executing the computer program 112, implements the steps in each of above-mentioned embodiments of the method for controlling the flashing light of the vehicle, such as steps 101 to 103 shown in FIG. 1. Or, the processor 110, when executing the computer program 112, implements the function of each module/unit in each of the above-mentioned apparatus embodiments, such as functions of the modules/units 1001 to 1003 shown in FIG. 10.

Exemplarily, the computer program 112 can be divided into one or more modules/units, and the one or more modules/units are stored in the memory 111 and are executed by the processor 110 so as to complete the invention. The one or more modules/units can be a series of computer program instruction segments capable of completing specific functions, and the instruction segments are configured to describe an execution process of the computer program 112 in the electronic device 11. For example, the computer program 112 can be divided into the modules/units 1001 to 1003 shown in FIG. 10.

The electronic device 11 can be a computing device, such as a desktop computer, a laptop, a handheld computer, and a cloud server. The electronic device 11 can include, but is not limited to, the processor 110 and the memory 111. It can be understood by the skilled in the art that FIG. 11 only shows an example of the electronic device 11, but does not constitute a limitation on the electronic device 11, and can include more or fewer components than those shown in the figure or combine some components or different components, for example, the electronic device can further include an input/output device, a network access device, a bus, etc.

The processor 110 can be a Central Processing Unit (CPU) and can also be other general-purpose processors, a Digital Signal Processor (DSP), an Application Specific Integrated Circuit (ASIC), a Field-Programmable Gate Array (FPGA) or other programmable logic devices, a discrete gate or transistor logic device, a discrete hardware component, etc. The general-purpose processor can be a microprocessor or the processor can also be any conventional processor, etc.

The memory 111 can be an internal storage unit of the electronic device 11, such as a hard disk or internal memory of the electronic device 11. The memory 111 can also be an external storage device of the electronic device 11, such as a plug-in hard disk, a Smart Media Card (SMC), a Secure Digital (SD) card and a Flash Card that are equipped on the electronic device 11. Further, the memory 111 can further include both the internal storage unit of the electronic device 11 and the external storage device. The memory 111 is configured to store a computer program and other programs and data required by the electronic device. The memory 111 can be further configured to temporarily store data that has been outputted or is to be outputted.

In the above description, the descriptions of each drawing have their own emphasis. For the parts that are not detailed or recorded in one drawing, reference is made to the relevant descriptions of other drawings.

When integrated modules/units are implemented in the form of software functional units and sold or used as independent products, they can be stored in a computer-readable storage medium. Based on the understanding, the present invention implements all or part of the processes in the above-mentioned method, which can be completed by controlling the relevant hardware through the computer programs. The computer program can be stored in a computer-readable storage medium, and when executed by a processor, it can implement the steps of the various acceleration control methods of the vehicle described above. Among them, the computer programs include computer program codes, which can be in the form of source codes, object codes, executable files, or some intermediate forms. The computer-readable medium can include: any entity or device capable of carrying the computer program codes, recording mediums, USB flash drives, portable hard drives, magnetic disks, optical disks, computer memory, read-only memory (ROM), random access memory (RAM), electric carrier signals, telecommunications signals, and software distribution medium.

## Claims

1. A method for controlling a flashing light of a vehicle, comprising:
(101) when a flashing light switching request is received, and a flashing light corresponding to the flashing light switching request and the current flashing light are the same flashing light, acquiring a first flicker frequency and a working state of the current flashing light and a second flicker frequency of the flashing light corresponding to the flashing light switching request; wherein the working state comprises an on state and an off state of flicker;
(102) determining a switching moment; and
(103) switching the first flicker frequency of the current flashing light to the second flicker frequency of the flashing light corresponding to the flashing light switching request at the switching moment, and the working state of the flashing light corresponding to the flashing light switching request is different from the working state of the current flashing light achieved when the flashing light switching request is received;
, **characterized in that,**
in the step of (102) determining the switching moment, the switching moment is determined according to the first flicker frequency and the working state of the current flashing light and the second flicker frequency, and
the step of (102) determining the switching moment comprises:
when the working state of the current flashing light is the off state, determining whether the second flicker frequency is higher than the first flicker frequency;
when the second flicker frequency is higher than the first flicker frequency, determining whether the lapsed duration time of the off state is shorter than the duration time of the on state corresponding to the second flicker frequency; and
when the lapsed duration time of the off state is shorter than the duration time of the on state corresponding to the second flicker frequency, determining that the switching moment is the moment at which the then lapsed duration time of the off state is equal to the duration time of the on state corresponding to the second flicker frequency.

2. The method for controlling the flashing light of the vehicle according to claim 1, wherein, after the step of determining whether the lapsed duration time of the off state is shorter than the duration time of the on state corresponding to the second flicker frequency, the method further comprises:
when the lapsed duration time of the off state is longer than or equal to the duration time of the on state corresponding to the second flicker frequency, determining that the switching moment is the moment at which the flashing light switching request is received.

3. The method for controlling the flashing light of the vehicle according to claim 1, wherein, after the step of determining whether the second flicker frequency is higher than the first flicker frequency, the method further comprises:
when the second flicker frequency is lower than the first flicker frequency, determining that the switching moment is the moment at which the off state corresponding to the first flicker frequency is ended.

4. The method for controlling the flashing light of the vehicle according to any one of claims 1 to 3, wherein, after the flashing light switching request is received, the method further comprises:
when the flashing light corresponding to the flashing light switching request and the current flashing light are not the same flashing light, after the flashing light switching request is received, turning off the current flashing light, and turning on the flashing light corresponding to the flashing light switching request.

5. An apparatus for controlling a flashing light of a vehicle, **characterized by** comprising:
an acquisition module (1001) configured to when a flashing light switching request is received, and a flashing light corresponding to the flashing light switching request and the current flashing light are the same flashing light, acquire a first flicker frequency and a working state of the current flashing light and a second flicker frequency of the flashing light corresponding to the flashing light switching request; wherein the working state comprises an on state and an off state of flicker;
a determining module (1002) configured to determine a switching moment; and
a processing module (1003) configured to switch the first flicker frequency of the current flashing light to the second flicker frequency of the flashing light corresponding to the flashing light switching request at the switching moment, and the working state of the flashing light corresponding to the flashing light switching request is different from the working state of the current flashing light achieved when the flashing light switching request is received;
**characterized in that,** the determining module (1002) is configured to:
determine the switching moment according to the first flicker frequency and the working state of the current flashing light and the second flicker frequency, and
when the working state of the current flashing light is the off state, determine whether the second flicker frequency is higher than the first flicker frequency;
when the second flicker frequency is higher than the first flicker frequency, determine whether the lapsed duration time of the off state is shorter than the duration time of the on state corresponding to the second flicker frequency; and
when the lapsed duration time of the off state is shorter than the duration time of the on state corresponding to the second flicker frequency, determine that the switching moment is the moment at which the then lapsed duration time of the off state is equal to the duration time of the on state corresponding to the second flicker frequency.

6. The apparatus for controlling the flashing light of the vehicle according to claim 5, wherein, the determining module (1002) is further configured to:
when the duration time of the off state is longer than or equal to the duration time of the on state corresponding to the second flicker frequency, determine that the switching moment is the moment at which the flashing light switching request is received.

7. The apparatus for controlling the flashing light of the vehicle according to claim 5, wherein, the determining module (1002) is further configured to:
when the second flicker frequency is lower than the first flicker frequency, determine that the switching moment is the moment at which the off state corresponding to the first flicker frequency is ended.

8. The apparatus for controlling the flashing light of the vehicle according to any one of claims 5 to 7, wherein, the processing module (1003) is further configured to:
when the flashing light corresponding to the flashing light switching request and the current flashing light are not the same flashing light, after the flashing light switching request is received, turn off the current flashing light, and turn on the flashing light corresponding to the flashing light switching request.

9. A vehicle comprising an electronic device, wherein the electronic device includes a memory, a processor, and a computer program stored in the memory and capable of running on the processor, wherein, the processor, when executing the computer program, implements the steps of the method for controlling the flashing light of the vehicle according to any one of claims 1 to 4.

10. A nonvolatile computer-readable storage medium, having a computer program stored thereon, wherein, the computer program, when executed by a processor, implements the steps of the method for controlling the flashing light of the vehicle according to any one of claims 1 to 4.

## Patentansprüche

1. Verfahren zum Steuern eines Blinklichts eines Fahrzeugs, aufweisend:
(101) wenn eine Blinklicht-Umschaltanforderung empfangen wird und ein Blinklicht, das der Blinklicht-Umschaltanforderung entspricht, und das aktuelle Blinklicht dasselbe Blinklicht sind, Erfassen einer ersten Blinkfrequenz und eines Betriebszustands des aktuellen Blinklichts und einer zweiten Blinkfrequenz des Blinklichts, das der Blinklicht-Umschaltanforderung entspricht, wobei der Betriebszustand einen Ein-Zustand und einen Aus-Zustand des Blinkens aufweist;
(102) Bestimmen eines Umschaltzeitpunkts; und
(103) Umschalten der ersten Blinkfrequenz des aktuellen Blinklichts auf die zweite Blinkfrequenz des Blinklichts, das der Blinklicht-Umschaltanforderung entspricht, zu dem Umschaltzeitpunkt, wobei der Betriebszustand des Blinklichts, das der Blinklicht-Umschaltanforderung entspricht, verschieden ist von dem Betriebszustand des aktuellen Blinklichts zum Zeitpunkt des Empfangens der Blinklicht-Umschaltanforderung;
**dadurch gekennzeichnet, dass**
in dem Schritt (102) des Bestimmens des Umschaltzeitpunkts der Umschaltzeitpunkt anhand der ersten Blinkfrequenz und des Betriebszustands des aktuellen Blinklichts und der zweiten Blinkfrequenz bestimmt wird und
der Schritt (102) des Bestimmens des Umschaltzeitpunkts aufweist:
wenn der Betriebszustand des aktuellen Blinklichts der Aus-Zustand ist, Bestimmen, ob die zweite Blinkfrequenz höher ist als die erste Blinkfrequenz;
wenn die zweite Blinkfrequenz höher ist als die erste Blinkfrequenz, Bestimmen, ob die verstrichene Dauer des Aus-Zustands kürzer ist als die Dauer des Ein-Zustands entsprechend der zweiten Blinkfrequenz; und
wenn die verstrichene Dauer des Aus-Zustands kürzer ist als die Dauer des Ein-Zustands entsprechend der zweiten Blinkfrequenz, Bestimmen, dass der Umschaltzeitpunkt der Zeitpunkt ist, zu dem die dann verstrichene Dauer des Aus-Zustands gleich der Dauer des Ein-Zustands entsprechend der zweiten Blinkfrequenz ist.

2. Verfahren zum Steuern des Blinklichts des Fahrzeugs nach Anspruch 1, wobei nach dem Schritt des Bestimmens, ob die verstrichene Dauer des Aus-Zustands kürzer ist als die Dauer des Ein-Zustands entsprechend der zweiten Blinkfrequenz, das Verfahren ferner aufweist:
wenn die verstrichene Dauer des Aus-Zustands länger ist als oder gleich ist der Dauer des Ein-Zustands entsprechend der zweiten Blinkfrequenz, Bestimmen, dass der Umschaltzeitpunkt der Zeitpunkt ist, zu dem die Blinklicht-Umschaltanforderung empfangen wird.

3. Verfahren zum Steuern des Blinklichts des Fahrzeugs nach Anspruch 1, wobei nach dem Schritt des Bestimmens, ob die zweite Blinkfrequenz höher ist als die erste Blinkfrequenz, das Verfahren ferner aufweist:
wenn die zweite Blinkfrequenz niedriger ist als die erste Blinkfrequenz, Bestimmen, dass der Umschaltzeitpunkt der Zeitpunkt ist, zu dem der Aus-Zustand entsprechend der ersten Blinkfrequenz beendet ist.

4. Verfahren zum Steuern des Blinklichts des Fahrzeugs nach einem der Ansprüche 1 bis 3, wobei das Verfahren nach dem Empfangen der Blinklicht-Umschaltanforderung ferner aufweist:
wenn das Blinklicht, das der Blinklicht-Umschaltanforderung entspricht, und das aktuelle Blinklicht nicht dasselbe Blinklicht sind, Ausschalten des aktuellen Blinklichts nach dem Empfangen der Blinklicht-Umschaltanforderung und Einschalten des Blinklichts, das der Blinklicht-Umschaltanforderung entspricht.

5. Vorrichtung zum Steuern eines Blinklichts eines Fahrzeugs, **gekennzeichnet durch**:
ein Erfassungsmodul (1001), das konfiguriert ist, wenn eine Blinklicht-Umschaltanforderung empfangen wird und ein Blinklicht, das der Blinklicht-Umschaltanforderung entspricht, und das aktuelle Blinklicht dasselbe Blinklicht sind, eine erste Blinkfrequenz und einen Betriebszustand des aktuellen Blinklichts und eine zweite Blinkfrequenz des Blinklichts, das der Blinklicht-Umschaltanforderung entspricht, zu erfassen, wobei der Betriebszustand einen Ein-Zustand und einen Aus-Zustand des Blinkens aufweist;
ein Bestimmungsmodul (1002), das konfiguriert ist, einen Umschaltzeitpunkt zu bestimmen; und
ein Verarbeitungsmodul (1003), das konfiguriert ist, die erste Blinkfrequenz des aktuellen Blinklichts zu dem Umschaltzeitpunkt auf die zweite Blinkfrequenz des Blinklichts umzuschalten, das der Blinklicht-Umschaltanforderung entspricht, wobei der Betriebszustand des Blinklichts, das der Blinklicht-Umschaltanforderung entspricht, verschieden ist von dem Betriebszustand des aktuellen Blinklichts zum Zeitpunkt des Empfangens der Blinklicht-Umschaltanforderung;
**dadurch gekennzeichnet, dass** das Bestimmungsmodul (1002) konfiguriert ist,
den Umschaltzeitpunkt anhand der ersten Blinkfrequenz und des Betriebszustands des aktuellen Blinklichts und der zweiten Blinkfrequenz zu bestimmen und
wenn der Betriebszustand des aktuellen Blinklichts der Aus-Zustand ist, zu bestimmen, ob die zweite Blinkfrequenz höher ist als die erste Blinkfrequenz;
wenn die zweite Blinkfrequenz höher ist als die erste Blinkfrequenz, zu bestimmen, ob die verstrichene Dauer des Aus-Zustands kürzer ist als die Dauer des Ein-Zustands entsprechend der zweiten Blinkfrequenz; und
wenn die verstrichene Dauer des Aus-Zustands kürzer ist als die Dauer des Ein-Zustands entsprechend der zweiten Blinkfrequenz, zu bestimmen, dass der Umschaltzeitpunkt der Zeitpunkt ist, zu dem die dann verstrichene Dauer des Aus-Zustands gleich der Dauer des Ein-Zustands entsprechend der zweiten Blinkfrequenz ist.

6. Vorrichtung zum Steuern des Blinklichts des Fahrzeugs nach Anspruch 5, wobei das Bestimmungsmodul (1002) ferner konfiguriert ist,
wenn die Dauer des Aus-Zustands länger ist als oder gleich ist der Dauer des Ein-Zustands entsprechend der zweiten Blinkfrequenz, zu bestimmen, dass der Umschaltzeitpunkt der Zeitpunkt ist, zu dem die Blinklicht-Umschaltanforderung empfangen wird.

7. Vorrichtung zum Steuern des Blinklichts des Fahrzeugs nach Anspruch 5, wobei das Bestimmungsmodul (1002) ferner konfiguriert ist,
wenn die zweite Blinkfrequenz niedriger ist als die erste Blinkfrequenz, zu bestimmen, dass der Umschaltzeitpunkt der Zeitpunkt ist, zu dem der Aus-Zustand entsprechend der ersten Blinkfrequenz beendet ist.

8. Vorrichtung zum Steuern des Blinklichts des Fahrzeugs nach einem der Ansprüche 5 bis 7, wobei das Verarbeitungsmodul (1003) ferner konfiguriert ist,
wenn das Blinklicht, das der Blinklicht-Umschaltanforderung entspricht, und das aktuelle Blinklicht nicht dasselbe Blinklicht sind, nach dem Empfangen der Blinklicht-Umschaltanforderung das aktuelle Blinklicht auszuschalten und das Blinklicht, das der Blinklicht-Umschaltanforderung entspricht, einzuschalten.

9. Fahrzeug aufweisend eine elektronische Vorrichtung, wobei die elektronische Vorrichtung einen Speicher, einen Prozessor und ein im Speicher gespeichertes und auf dem Prozessor ausführbares Computerprogramm aufweist, wobei der Prozessor beim Ausführen des Computerprogramms die Schritte des Verfahrens zum Steuern des Blinklichts des Fahrzeugs nach einem der Ansprüche 1 bis 4 implementiert.

10. Nichtflüchtiges, computerlesbares Speichermedium, aufweisend ein darauf gespeichertes Computerprogramm, wobei das Computerprogramm, wenn es von einem Prozessor ausgeführt wird, die Schritte des Verfahrens zum Steuern des Blinklichts des Fahrzeugs nach einem der Ansprüche 1 bis 4 implementiert.

## Revendications

1. Procédé pour commander un feu à clignotement d'un véhicule, comprenant :
(101) lorsqu'une requête de commutation de feu à clignotement est reçue, et qu'un feu à clignotement qui correspond à la requête de commutation de feu à clignotement et le feu à clignotement courant sont le même feu à clignotement, l'acquisition d'une première fréquence de scintillement et d'un état de fonctionnement du feu à clignotement courant ainsi que d'une seconde fréquence de scintillement du feu à clignotement qui correspond à la requête de commutation de feu à clignotement ; dans lequel l'état de fonctionnement comprend un état d'activation et un état de désactivation de scintillement ;
(102) la détermination d'un instant de commutation ; et
(103) la commutation de la première fréquence de scintillement du feu à clignotement courant selon la seconde fréquence de scintillement du feu à clignotement qui correspond à la requête de commutation de feu à clignotement à l'instant de commutation, et l'état de fonctionnement du feu à clignotement qui correspond à la requête de commutation de feu à clignotement est différent de l'état de fonctionnement du feu à clignotement courant qui est atteint lorsque la requête de commutation de feu à clignotement est reçue ;
**caractérisé en ce que** :
au niveau de l'étape (102) de détermination de l'instant de commutation, l'instant de commutation est déterminé en fonction de la première fréquence de scintillement et de l'état de fonctionnement du feu à clignotement courant ainsi que de la seconde fréquence de scintillement ; et
l'étape (102) de détermination de l'instant de commutation comprend :
lorsque l'état de fonctionnement du feu à clignotement courant est l'état de désactivation, la détermination de si la seconde fréquence de scintillement est ou non plus élevée que la première fréquence de scintillement ;
lorsque la seconde fréquence de scintillement est plus élevée que la première fréquence de scintillement, la détermination de si la durée temporelle écoulée de l'état de désactivation est ou non plus courte que la durée temporelle de l'état d'activation qui correspond à la seconde fréquence de scintillement ; et
lorsque la durée temporelle écoulée de l'état de désactivation est plus courte que la durée temporelle de l'état d'activation qui correspond à la seconde fréquence de scintillement, la détermination du fait que l'instant de commutation est l'instant auquel la durée temporelle écoulée alors de l'état de désactivation est égale à la durée temporelle de l'état d'activation qui correspond à la seconde fréquence de scintillement.

2. Procédé pour commander le feu à clignotement du véhicule selon la revendication 1, dans lequel, après l'étape de détermination de si la durée temporelle écoulée de l'état de désactivation est ou non plus courte que la durée temporelle de l'état d'activation qui correspond à la seconde fréquence de scintillement, le procédé comprend en outre :
lorsque la durée temporelle écoulée de l'état de désactivation est plus longue que la durée temporelle de l'état d'activation qui correspond à la seconde fréquence de scintillement ou qu'elle lui est égale, la détermination du fait que l'instant de commutation est l'instant auquel la requête de commutation de feu à clignotement est reçue.

3. Procédé pour commander le feu à clignotement du véhicule selon la revendication 1, dans lequel, après l'étape de détermination de si la seconde fréquence de scintillement est ou non plus élevée que la première fréquence de scintillement, le procédé comprend en outre :
lorsque la seconde fréquence de scintillement est plus faible que la première fréquence de scintillement, la détermination du fait que l'instant de commutation est l'instant auquel l'état de désactivation qui correspond à la première fréquence de scintillement est terminé.

4. Procédé pour commander le feu à clignotement du véhicule selon l'une quelconque des revendications 1 à 3, dans lequel, après que la requête de commutation de feu à clignotement est reçue, le procédé comprend en outre :
lorsque le feu à clignotement qui correspond à la requête de commutation de feu à clignotement et le feu à clignotement courant ne sont pas le même feu à clignotement, après que la requête de commutation de feu à clignotement est reçue, la désactivation du feu à clignotement courant et l'activation du feu à clignotement qui correspond à la requête de commutation de feu à clignotement.

5. Appareil pour commander un feu à clignotement d'un véhicule, **caractérisé en ce qu'**il comprend :
un module d'acquisition (1001) configuré pour, lorsqu'une requête de commutation de feu à clignotement est reçue, et qu'un feu à clignotement qui correspond à la requête de commutation de feu à clignotement et le feu à clignotement courant sont le même feu à clignotement, acquérir une première fréquence de scintillement et un état de fonctionnement du feu à clignotement courant ainsi qu'une seconde fréquence de scintillement du feu à clignotement qui correspond à la requête de commutation de feu à clignotement ; dans lequel l'état de fonctionnement comprend un état d'activation et un état de désactivation de scintillement ;
un module de détermination (1002) configuré pour déterminer un instant de commutation ; et
un module de traitement (1003) configuré pour commuter la première fréquence de scintillement du feu à clignotement courant selon la seconde fréquence de scintillement du feu à clignotement qui correspond à la requête de commutation de feu à clignotement à l'instant de commutation, et l'état de fonctionnement du feu à clignotement qui correspond à la requête de commutation de feu à clignotement est différent de l'état de fonctionnement du feu à clignotement courant qui est atteint lorsque la requête de commutation de feu à clignotement est reçue ;
**caractérisé en ce que** le module de détermination (1002) est configuré pour :
déterminer l'instant de commutation en fonction de la première fréquence de scintillement et de l'état de fonctionnement du feu à clignotement courant ainsi que de la seconde fréquence de scintillement ; et
lorsque l'état de fonctionnement du feu à clignotement courant est l'état de désactivation, déterminer si la seconde fréquence de scintillement est ou non plus élevée que la première fréquence de scintillement ;
lorsque la seconde fréquence de scintillement est plus élevée que la première fréquence de scintillement, déterminer si la durée temporelle écoulée de l'état de désactivation est ou non plus courte que la durée temporelle de l'état d'activation qui correspond à la seconde fréquence de scintillement ; et
lorsque la durée temporelle écoulée de l'état de désactivation est plus courte que la durée temporelle de l'état d'activation qui correspond à la seconde fréquence de scintillement, déterminer que l'instant de commutation est l'instant auquel la durée temporelle écoulée alors de l'état de désactivation est égale à la durée temporelle de l'état d'activation qui correspond à la seconde fréquence de scintillement.

6. Appareil pour commander le feu à clignotement du véhicule selon la revendication 5, dans lequel le module de détermination (1002) est en outre configuré pour :
lorsque la durée temporelle de l'état de désactivation est plus longue que la durée temporelle de l'état d'activation qui correspond à la seconde fréquence de scintillement ou qu'elle lui est égale, déterminer que l'instant de commutation est l'instant auquel la requête de commutation de feu à clignotement est reçue.

7. Appareil pour commander le feu à clignotement du véhicule selon la revendication 5, dans lequel le module de détermination (1002) est en outre configuré pour :
lorsque la seconde fréquence de scintillement est plus faible que la première fréquence de scintillement, déterminer que l'instant de commutation est l'instant auquel l'état de désactivation qui correspond à la première fréquence de scintillement est terminé.

8. Appareil pour commander le feu à clignotement du véhicule selon l'une quelconque des revendications 5 à 7, dans lequel le module de traitement (1003) est en outre configuré pour :
lorsque le feu à clignotement qui correspond à la requête de commutation de feu à clignotement et le feu à clignotement courant ne sont pas le même feu à clignotement, après que la requête de commutation de feu à clignotement est reçue, désactiver le feu à clignotement courant et activer le feu à clignotement qui correspond à la requête de commutation de feu à clignotement.

9. Véhicule comprenant un dispositif électronique, dans lequel le dispositif électronique inclut une mémoire, un processeur et un programme d'ordinateur qui est stocké dans la mémoire et qui peut être déroulé sur le processeur, dans lequel, le processeur, lorsqu'il exécute le programme d'ordinateur, met en œuvre les étapes du procédé pour commander le feu à clignotement du véhicule selon l'une quelconque des revendications 1 à 4.

10. Support de stockage lisible par ordinateur non volatile, comportant un programme d'ordinateur stocké en son sein, dans lequel, le programme d'ordinateur, lorsqu'il est exécuté par un processeur, met en œuvre les étapes du procédé pour commander le feu à clignotement du véhicule selon l'une quelconque des revendications 1 à 4.
